# EUROPÄISCHE PATENTSCHRIFT

(11) **EP 3 360 827 B1**
(45) Veröffentlichungstag und Bekanntmachung des Hinweises auf die Patenterteilung: **03.11.2021**
(21) Anmeldenummer: 18154570.8
(22) Anmeldetag: 01.02.2018
(51) Int. Cl.: B65G 19/02, B65G 47/61

(54) **BELADESTATION FÜR EINE HÄNGEFÖRDERANLAGE, MIT EINER ABWEISEVORRICHTUNG FÜR TRANSPORTTASCHEN**
LOADING STATION FOR AN OVERHEAD CONVEYOR SYSTEM, COMPRISING A GUARD DEVICE FOR TRANSPORT BAGS
POSTE DE CHARGEMENT POUR UNE INSTALLATION DE TRANSPORT SUSPENDUE, POURVU D'UN DISPOSITIF DE DEFLECTION POUR POCHES DE TRANSPORT

(30) Priorität: 13.02.2017 DE 102017202200
(43) Veröffentlichungstag der Anmeldung: 15.08.2018
(73) Patentinhaber: Dürkopp Fördertechnik GmbH, 33719 Bielefeld (DE)
(72) Erfinder: Janzen, Paul, 33619 Bielefeld (DE)
(74) Vertreter: Rau, Schneck & Hübner Patentanwälte Rechtsanwälte PartGmbB

(56) Entgegenhaltungen:
- EP-A1- 2 418 160
- DE-A1-102008 061 685
- DE-A1-102012 018 925
- JP-U- S52 168 750
- US-A- 3 504 713
- US-A- 4 258 494

## Beschreibung

Die Erfindung betrifft eine Beladestation mit einer Abweisevorrichtung. Auf der JP S52 168 750 U und der US 3,504,713 A sind Sack-Befüllungsvorrichtungen bekannt, bei welchen mittels einer beweglichen Verteilplatte eine gleichmäßige Sackbefüllung ermöglicht wird.

Die DE 10 2012 018 925 A1 offenbart eine Beladestation für eine Tasche für Hängeförderer. Die Tasche wird horizontal gestützt, um eine seitliche Beladung zu ermöglichen.

Die EP 2 418 160 A1 offenbart eine Beladestation nach dem Oberbegriff des Anspruchs 1. Insbesondere, betrifft das Dokument eine Förderungsanlage mit Tragetaschen für Fördergut.

Die US 4,258,494 offenbart einen Schilderständer mit Querarm.

In einer Hängeförderanlage dient eine Beladestation zum Beladen von hängend transportierten Transporttaschen mit Transportgut, das unterschiedliche Größen, unterschiedliche Masse und unterschiedliche Verpackung aufweisen kann. Eine derartige Beladestation ist bekannt aus DE 10 2008 061 685 A1. Um zu gewährleisten, dass die Transporttaschen zuverlässig auch mit großen Kartons beladen werden, werden die Transporttaschen maximal weit geöffnet. Durch das maximale Öffnen der Tasche können kleinere Transportgüter undefiniert in die Transporttasche fallen und insbesondere derart in der Transporttaschen angeordnet sein, dass die größte Dimension des Kartons die in Förderrichtung orientierte Taschenbreite festlegt. In dieser Weise geförderte Kartons können in einem Staubereich der Hängeförderanlage in Folge des Staudrucks beschädigt werden. Biegeschlaffe Ware, die beispielsweise in Tüten verpackt ist, kann in Folge der maximalen Taschenöffnung U-förmig gefaltet oder geknickt auf dem Taschenboden zu liegen kommen und somit eine unerwünschte Faltlinie verursachen.

Es ist die Aufgabe der vorliegenden Erfindung, das Beladen von Transporttaschen zuverlässig, unaufwändig und trotzdem in Abhängigkeit des Transportguts flexibel zu ermöglichen.

Diese Aufgabe ist erfindungsgemäß gelöst durch eine Beladestation mit den in Anspruch 1 angegebenen Merkmalen.

Erfindungsgemäß wurde erkannt, dass eine verbesserte Beladung von Transporttaschen mit einer Abweisevorrichtung möglich ist. Die Abweisevorrichtung weist eine Prallplatte auf. Die Prallplatte stützt eine Rückwand der Transporttasche beim Beladen mit dem Transportgut, wobei eine Verbindungseinheit eine Beweglichkeit der Prallplatte ermöglicht. Die Verbindungseinheit dient zum beweglichen Verbinden der Prallplatte mit einer Befestigungseinheit. Die Befestigungseinheit dient zum Befestigen der Abweisevorrichtung an einer Fördervorrichtung einer Hängeförderanlage. Die Abweisevorrichtung ist insbesondere im Bereich einer Beladestation der Hängeförderanlage vorgesehen. Die Fördervorrichtung ist insbesondere eine Förderschiene, längs der die Transporttaschen entlang einer Förderrichtung transportiert werden können. Die Transporttaschen können mittels Rolladaptem, wie sie beispielsweise aus der DE 10 2005 006 455 A1 bekannt sind, oder ohne Rolladapter, insbesondere mit einem Bügelhals, transportiert werden. Die Abweisevorrichtung ermöglicht ein Auslenken der Prallplatte in Abhängigkeit der Größe des Transportguts. In der Beladestation befindet sich die Transporttasche in einer geöffneten Position. In der geöffneten Position weist die Transporttasche eine Taschenöffnung mit einer Größe derart auf, dass ein Transportgut von der Beladestation zunächst in die Transporttasche durch die Öffnung hineinragen kann. Wenn das Transportgut derart groß ist, dass es durch die Öffnung nicht selbsttätig in Folge der Schwerkraft in die Transporttasche fallen kann, ermöglicht die bewegliche Prallplatte ein Ausweichen der Rückwand der Transporttasche und dadurch ein Vergrößern der Öffnung der Transporttasche. Durch das Auslenken der Prallplatte durch das Transportgut wird auf die Prallplatte eine Rückstellkraft eingeprägt. Sobald das Transportgut durch die Öffnung der Transporttasche in diese gefallen ist, wird die Prallplatte selbsttätig infolge der Rückstellkraft in die Ausgangsposition zurückverlagert und dadurch die Öffnung der Transporttasche in die Ausgangsposition rückgeführt. Die Abweisevorrichtung wirkt insbesondere ausschließlich passiv. Zusätzliche Komponenten, insbesondere aktive oder antreibbare Öffnungsvorrichtungen, die ein aktives Öffnen der Transporttasche bewirken, sind entbehrlich. Die Abweisevorrichtung ist robust und unkompliziert ausgeführt. Die Abweisevorrichtung ermöglicht die individuelle Anpassung der Öffnung der Transporttasche an die Größe des Transportguts.

Die Abweisevorrichtung ist insbesondere als Bestandteil einer Beladestation einer Hängeförderanlage ausgeführt. Die Abweisevorrichtung ist insbesondere bezüglich der Transportrichtung der Transporttaschen unbeweglich angeordnet. Die Prallplatte ist, abgesehen von der beweglichen Verbindung mit der Befestigungseinheit, unbeweglich an der Abweisevorrichtung angeordnet. Die Prallplatte ist getrennt von der Transporttasche ausgeführt. Die Transporttasche wird entlang der Transportrichtung der Hängeförderanlage durch die Beladestation transportiert. Insbesondere wird die Transporttasche entlang der Transportrichtung in die Beladeposition befördert, an der die Abweisevorrichtung angeordnet ist. Nach dem Beladen wird die Transporttasche insbesondere von der Abweisevorrichtung weg transportiert. Die Prallplatte ist Bestandteil der Abweisevorrichtung. Die Transporttasche ist nicht Bestandteil der Abweisevorrichtung.

Die Beladestation ist insbesondere Teil der Hängeförderanlage. Die Beladestation weist eine Fördervorrichtung zum Fördern der Transporttaschen entlang einer Förderrichtung auf. Die Fördervorrichtung weist insbesondere eine Förderschiene auf. Die Beladestation weist zudem eine Zuführvorrichtung auf, um das Transportgut entlang einer Transportgutzuführrichtung zuzuführen. Die Beladestation weist ferner die Abweisevorrichtung auf, die an der Fördervorrichtung befestigt ist. Vorteilhaft ist es, wenn die Transportgutzuführrichtung quer und insbesondere senkrecht zur Förderrichtung der Transporttaschen orientiert ist. Dadurch ist die Zugänglichkeit der Transporttaschen zum Beladen verbessert.

Eine Abweisevorrichtung gemäß Anspruch 2 ermöglicht eine besonders vorteilhafte, weil unkomplizierte, Auslenkung der Prallplatte. Die Prallplatte kann an der Befestigungseinheit verschwenkt werden. Insbesondere ist die Prallplatte in einer Ausgangsposition in Folge der Schwerkraft vertikal nach unten hängend angeordnet. Durch die Beaufschlagung der Prallplatte mit einer Beladekraft beim Beladen mit dem Transportgut wird die Prallplatte entgegen der Schwerkraft verschwenkt, also ausgelenkt. Die eingeprägte Rückstellkraft ist die Schwerkraft, die zu einem unmittelbaren Rückstellen der Prallplatte in die Ausgangsposition führt, sobald die von dem Transportgut ausgeübte Kraft nicht mehr vorliegt. Das in Folge der Rückstellkraft eingeprägte Rückstelldrehmoment, das auf die Prallplatte wirkt, ist direkt proportional zu deren Verschwenkung. Je größer der Schwenkwinkel ist, desto größer ist die Rückstellkraft. Die Verbindungseinheit ist insbesondere um eine Befestigungseinheit-Schwenkachse zur Befestigungseinheit schwenkbar angelenkt. Die schwenkbare Anlenkung kann insbesondere vorteilhaft durch eine Bolzenverbindung mit einer schwenkbaren Hülse erfolgen. Insbesondere ist die Verbindungseinheit als schwenkbare Hülse ausgeführt. Diese Ausführung ist besonders unkompliziert und kostensparend. Die Prallplatte kann unmittelbar an der um die Befestigungseinheit-Schwenkachse schwenkbare Hülse oder an einem Verbindungsarm, der an der schwenkbaren Hülse befestigt ist, angelenkt sein. Der Verbindungsarm erstreckt sich insbesondere radial zur Befestigungseinheit-Schwenkachse. Die Befestigungseinheit-Schwenkachse ist insbesondere parallel zur Förderrichtung der Transporttasche orientiert. Die Transporttasche ist insbesondere schwenkbar zur Förderrichtung in der Fördervorrichtung, insbesondere der Förderschiene, angeordnet.

Eine Abweisevorrichtung gemäß Anspruch 3 ermöglicht eine vorteilhafte Schwenkbarkeit der Prallplatte selbst. Dadurch, dass die Verbindungseinheit um eine Prallplatten-Schwenkachse schwenkbar an der Prallplatte angelenkt ist, ist es möglich, dass die Prallplatte trotz einer Auslenkung, insbesondere einer Verschwenkung gegenüber der Befestigungseinheit vertikal nach unten hängend an der Rückseite der Transporttasche angeordnet ist. Die Prallplatten-Schwenkachse ist insbesondere parallel zur Förderrichtung der Transporttasche und insbesondere parallel zur Befestigungseinheit-Schwenkachse orientiert.

Die Verbindungseinheit bildet insbesondere ein Schwenkgelenk zur schwenkbaren Verbindung der Prallplatte an der Befestigungseinheit. Das Schwenkgelenk kann als entlang der Förderrichtung durchgängiges, einteiliges Scharnier ausgeführt sein. Das Scharnier ist in diesem Fall leistenartig ausgeführt. Es ist auch denkbar, dass entlang der Fördervorrichtung zwei oder mehr beabstandet angeordnete Scharniere angeordnet sind, die jeweils eine scharniergelenkige Anordnung der Prallplatte an der Befestigungseinheit ermöglichen.

Die Ausführung der Verbindungseinheit gemäß Anspruch 4 ist vorteilhaft. Insbesondere ist eine Kette als Standardbaukomponente im Bereich der Fördertechnik verfügbar. Die Kette ermöglicht eine flexible und robuste schwenkgelenkige Anordnung der Prallplatte an der Befestigungseinheit.

Alternativ kann die Verbindungseinheit gemäß Anspruch 5 ein Linearverlagerungselement aufweisen, um eine Linearverlagerung der Prallplatte gegenüber der Befestigungseinheit zu ermöglichen. Die Linearverlagerung erfolgt entlang einer linearen Verlagerungsrichtung, die insbesondere senkrecht zur Förderrichtung der Transporttasche orientiert ist. Insbesondere ist die Verlagerungsrichtung im Wesentlichen entlang einer Transportgutzuführrichtung orientiert. Dadurch ist gewährleistet, dass eine unmittelbare Ausweichbewegung der Prallplatte in Folge der Zuführung des Beladeguts vereinfacht möglich ist.

Führungselemente gemäß Anspruch 6 gewährleisten eine möglichst zuverlässige passive Verlagerung der Prallplatte. Die Führungselemente können beispielsweise Führungsrollen aufweisen, die an jeweils korrespondierenden Führungsbahnen, insbesondere Führungsschienen, abrollen. Es können zusätzlich oder alternativ zu den Führungsrollen Gleitelemente vorgesehen sein.

Ein Kraftspeicherelement gemäß Anspruch 7 unterstützt die Rückstellung der Prallplatte in die Ausgangsposition. Beispielsweise kann das Kraftspeicherelement als Federelement, insbesondere als Schraubenfeder, ausgeführt sein. Das Kraftspeicherelement ist insbesondere dann vorgesehen, wenn die Verbindungseinheit ein Linearverlagerungselement aufweist. Das Kraftspeicherelement kann aber auch vorgesehen sein, wenn die Verbindungseinheit als Scharnier ausgeführt ist. Durch das Kraftspeicherelement wird eine Federkraft als Rückstellkraft auf die Prallplatte ausgeübt, wobei die Rückstellkraft insbesondere proportional zur Auslenkung der Prallplatte ist. In Abhängigkeit der Anlenkungspunkte des Kraftspeicherelements kann eine Zugfeder oder eine Druckfeder vorgesehen sein.

Alternativ oder zusätzlich zu den Kraftspeicherelementen können Stellglieder in Form von Stufenzylindern verwendet werden, um mit einer im Wesentlichen konstanten Kraft eine Verlagerung der Prallplatte zu ermöglichen. Bei der Verwendung von Stellgliedern ist eine Messeinheit vorteilhaft, die die Höhe eines Transportguts, insbesondere eines Kartons, und insbesondere auch dessen Gewicht, erfasst, um eine erforderliche Verlagerung der Prallplatte über das mindestens eine Stellglied zu veranlassen.

Ein Verlagerungsaktor gemäß Anspruch 8 unterstützt die Verlagerung der Prallplatte. Dadurch wird die Krafteinwirkung auf die Verpackung des Transportguts reduziert. Die Gefahr von Beschädigungen des Transportguts ist reduziert.

Ein Zuführelement an der Prallplatte gemäß Anspruch 9 gewährleistet ein geordnetes Zuführen der Transporttaschen in die Beladestation. Ein unbeabsichtigtes Pendeln der Transporttasche in der Beladestation in einer Ebene senkrecht zur Förderrichtung ist erschwert und insbesondere verhindert.

Eine Anordnung der Prallplatte gemäß Anspruch 10 ermöglicht eine zuverlässige und robuste Zuführung und dadurch Beladung der Transporttaschen. Die Prallplatte kann auftretende, von dem Transportgut verursachte Kräfte auf die Prallplatte vorteilhaft aufnehmen.

Eine Erfassungseinheit gemäß Anspruch 11 ermöglicht das Erfassen von Größe und/oder Masse des Transportguts. Die Erfassungseinheit kann in Form von einer oder mehreren Lichtschranken ausgeführt sein, die im Bereich der Transporttaschen angeordnet sind.

Eine Steuerungseinheit gemäß Anspruch 12 ermöglicht das gesteuerte Beladen der Transporttaschen in der Beladestation. Insbesondere ist ein Anordnen der Transporttaschen in der Beladestation, beispielsweise das Stoppen der Transporttaschen in der Beladestation, gesteuert möglich.

Eine Signalverbindung gemäß Anspruch 13 ermöglicht eine direkte Kommunikation zwischen der Steuerungseinheit und der Erfassungseinheit und/oder einem Verlagerungsaktor, um das Beladen der Transporttasche zusätzlich zu verbessern.

Eine Beladestation gemäß Anspruch 14 ermöglicht eine unaufwändige Beladung. Die Beladestation kann als Beladetisch mit einer Ablagefläche ausgeführt sein. Über einen Zuführschacht, der als nach unten geneigte Rampe am Beladetisch vorgesehen ist, ist eine direkte, schwerkraftbedingte Zuführung von Transportgut in die Transporttasche möglich. Die Beladestation ist für die manuelle Beladung durch eine Bedienperson vorgesehen. Zusätzlich oder alternativ kann die Zuführung des Transportguts automatisiert mittels eines Gurtförderers erfolgen, der insbesondere derart angeordnet ist, dass eine der Umlenkrollen im Bereich der Taschenöffnung angeordnet ist. Alternativ kann auch ein Rollenförderer zum Zuführen vorgesehen sein, der insbesondere bei großen, also großvolumigen, Transportgut vorteilhaft ist.

Weitere Vorteile, zusätzliche Merkmale und Einzelheiten der Erfindung ergeben sich aus der nachfolgenden Beschreibung von Ausführungsbeispielen anhand der Zeichnung. Es zeigen:
- Fig. 1: eine perspektivische Darstellung von vorne einer erfindungsgemäßen Beladestation einer Hängeförderanlage mit einer Abweisevorrichtung für Transporttaschen,
- Fig. 2: eine perspektivische Darstellung von hinten der Beladestation gemäß Fig. 1,
- Fig. 3: eine Draufsicht auf die Beladestation gemäß Fig. 1,
- Fig. 4: eine Schnittdarstellung gemäß Schnittlinie IV-IV in Fig. 3,
- Fig. 5: eine vergrößerte Detaildarstellung des Details V in Fig. 4
- Fig. 6: eine Fig. 3 entsprechende Ansicht einer Beladestation mit einer Abweisevorrichtung gemäß einer weiteren Ausführungsform,
- Fig. 7: eine Schnittdarstellung gemäß Schnittlinie VII-VII in Fig. 6,
- Fig. 8: eine vergrößerte Detaildarstellung des Details VIII in Fig. 7,
- Fig. 9: eine vergrößerte perspektivische Darstellung der Abweisevorrichtung gemäß Fig. 6,
- Fig. 10: eine Rückansicht der Abweisevorrichtung gemäß Fig. 9,
- Fig. 11: eine vergrößerte Detaildarstellung des Details XI in Fig. 9,
- Fig. 12: eine Schnittdarstellung gemäß Schnittlinie XII-XII in Fig. 13 einer weiteren Ausführungsform eine Abweisevorrichtung,
- Fig. 13: eine Draufsicht auf die Abweisevorrichtung gemäß Fig. 12,
- Fig. 14: eine perspektivische Darstellung der Beladestation gemäß Fig. 12,
- Fig. 15: eine vergrößerte Detaildarstellung des Details XV in Fig. 14,
- Fig. 16: eine Fig. 14 entsprechende Darstellung einer Beladestation mit einer Abweisevorrichtung gemäß einer weiteren Ausführungsform,
- Fig. 17: eine vergrößerte Detaildarstellung des Details XVII in Fig. 16,
- Fig. 18: eine Fig. 4 entsprechende Seitenansicht einer Beladestation mit einer Abweisevorrichtung gemäß einer weiteren Ausführungsform,
- Fig. 19: eine vergrößerte Detaildarstellung des Details XIX in Fig. 18,
- Fig. 20: eine perspektivische Darstellung der Beladestation gemäß Fig. 18,
- Fig. 21: eine vergrößerte Detaildarstellung des Details XXI in Fig. 20,
- Fig. 22: eine Fig. 2 entsprechende Perspektivdarstellung einer Beladestation mit einer Abweisevorrichtung gemäß einer weiteren Ausführungsform,
- Fig. 23: eine vergrößerte Detaildarstellung des Details XXIII in Fig. 22,
- Fig. 24: eine Fig. 23 entsprechende vergrößerte Detaildarstellung einer weiteren Ausführungsform einer Abweisevorrichtung mit Kettenelementen.

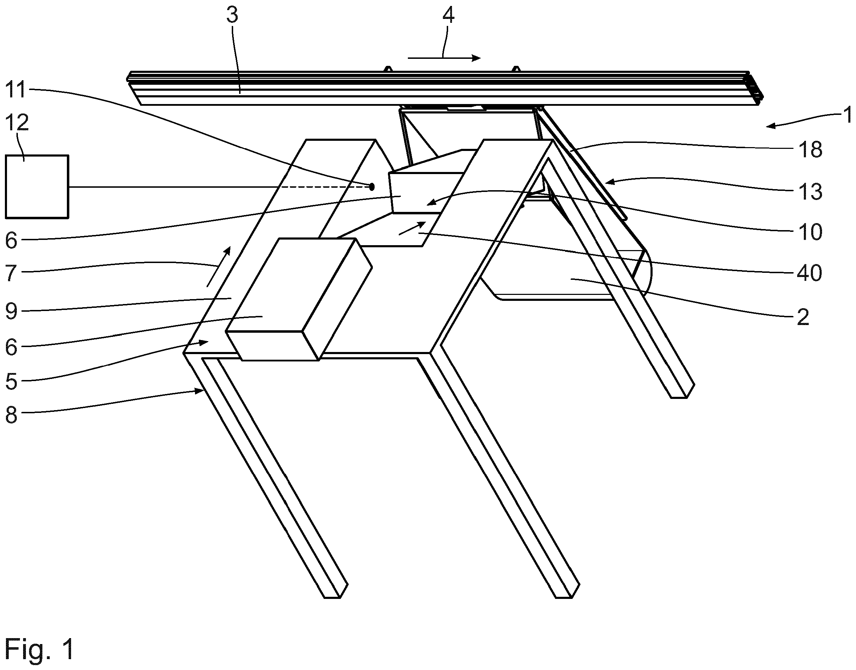

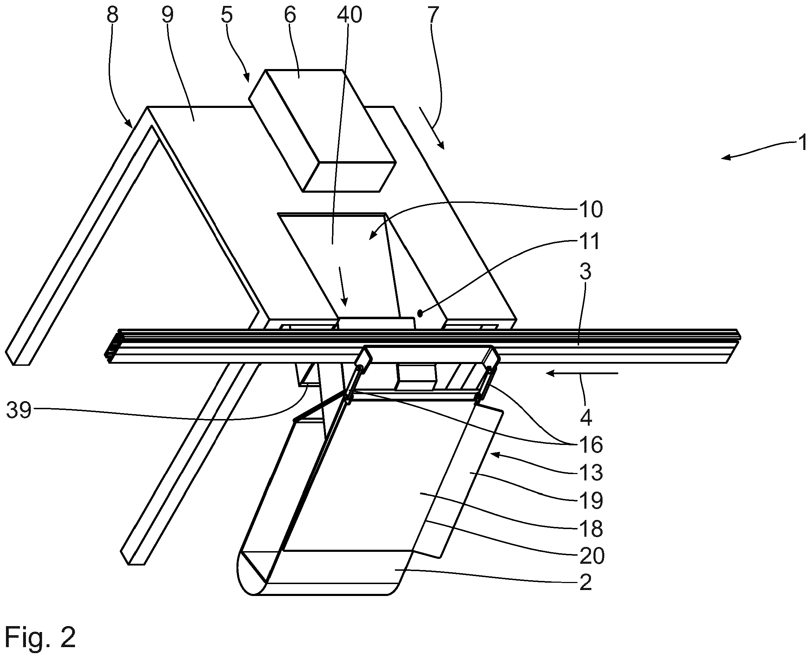

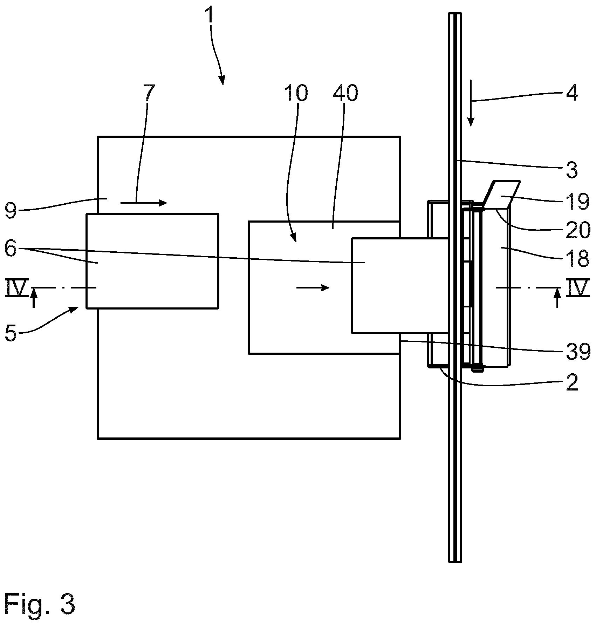

Eine in Fig. 1 bis 5 dargestellte Beladestation 1 ist Teil einer nicht näher dargestellten Hängeförderanlage. In der Hängeförderanlage werden Transporttaschen 2 entlang einer von einer Fördervorrichtung 3 vorgegebenen Förderrichtung 4 hängend gefördert. Die Fördervorrichtung 3 weist eine Förderschiene auf, entlang der die Transporttaschen 2 mit einem nicht näher dargestellten Rollelement verlagerbar angeordnet sind. Das Rollelement kann als Rolladapter oder als Bügelhals ausgeführt sein.

Die Transporttaschen 2 sind im Wesentlichen aus einem Textilmaterial ausgeführt. Die Transporttaschen 2 weisen einen oberen Metallrahmen auf, der die Öffnung zum Beladen der Transporttasche 2 vorgibt. Die Transporttaschen 2 hängen in Folge der Schwerkraft an der Fördervorrichtung 3 senkrecht nach unten.

Die Fördervorrichtung 3 ist gemäß dem gezeigten Ausführungsbeispiel horizontal orientiert. Um die Förderung der Transporttaschen 2 zu ermöglichen, kann die Fördervorrichtung 3 eine Antriebsvorrichtung, insbesondere ein angetriebenes Zugmittel, insbesondere eine Förderkette, aufweisen. Es ist auch denkbar, die Fördervorrichtung 3 zusätzlich oder alternativ mit einem Gefälle geneigt anzuordnen, um ein selbsttätiges Fördern der Transporttaschen 2 in Folge der Schwerkraft zu ermöglichen.

An der Beladestation 1 kann eine nicht näher dargestellte Stoppvorrichtung vorgesehen sein, um ein definiertes Stoppen der Transporttaschen 2 an der Beladestation 1 zu gewährleisten. Eine Stoppvorrichtung kann auch dadurch ausgeführt sein, dass die Antriebsvorrichtung, wenn die Transporttasche in der gewünschten Position in der Beladestation 1 angekommen ist, gezielt, insbesondere gesteuert, gestoppt wird. Die Erfassung der Zielposition der Transporttasche 2 in der Beladestation 1 kann sensorgesteuert erfolgen. Die Stoppvorrichtung kann auch mechanische Stoppelemente aufweisen, die eine automatische, insbesondere schwerkraftbedingte Weiterförderung der Transporttaschen 2 entlang der Förderrichtung 4 verhindern.

Die Beladestation 1 weist eine Zuführvorrichtung 5 auf, die zum Zuführen von Transportgut 6 entlang einer Transportgutzuführrichtung 7 dient. Die Zuführvorrichtung 5 ist als Beladetisch 8 ausgeführt, dessen Tischhöhe im Wesentlichen der Höhe entspricht, an der die Förderschiene der Fördervorrichtung 3 angeordnet ist.

Als Transportgüter dienen gemäß dem gezeigten Ausführungsbeispiel Verpackungskartons, die quaderförmig ausgeführt sind. Es sind auch andersförmige Versandkartons als Transportgut 6 denkbar. Es ist auch denkbar, dass das Transportgut biegeschlaff ausgeführt ist und beispielsweise ein textiles Produkt, insbesondere ein Kleidungsstück, umfasst, das in einer forminstabilen Verpackungstüte angeordnet ist.

Der Beladetisch 8 weist eine obere Ablagefläche 9 auf, die im Wesentlichen horizontal orientiert ist. In die Ablagefläche 9 ist eine geneigte Vertiefung eingebracht, die einen Zuführschacht 10 für das Transportgut 6 zu der Transporttasche 2 bildet. Der Zuführschacht 10 weist ein der Transporttasche 2 zugewandtes Gefälle auf, sodass das Transportgut 6, das in den Zuführschacht 10 beispielsweise von einer nicht dargestellten Bedienperson geschoben wird, in Folge der Schwerkraft selbsttätig in die geöffnete Transporttasche 2 rutschen kann. Der Zuführschacht 10 weist eine der Transporttasche 2 zugewandte Übergabekante 39 auf. Mit der Übergabekante 39 schließt der Zuführschacht 10 entlang der Transportgutzuführrichtung 7 ab. Über die Übergabekante 39 kann das Transportgut 6 in die Transporttasche 2 gleiten. Solange der Schwerpunkt des Transportguts 6 auf der schrägen Rutschfläche 40 des Zuführschachts 10 angeordnet ist, ist ein Rutschen des Transportguts 6 entlang der Transportgutzuführrichtung 7 gewährleistet. Sobald der Schwerpunkt des Transportguts 6 entlang der Transportgutzuführrichtung 7 die Übergabekante 39 passiert hat, kippt das Transportgut 6 um die Übergabekante 39 in die Transporttasche 2.

Im Bereich des Zuführschachts 10 ist eine Erfassungseinheit 11 in Form einer Lichtschranke vorgesehen. Die Erfassungseinheit 11 ist mit einer in Fig. 1 rein schematisch dargestellten Steuerungseinheit 12 in Signalverbindung. Die Signalverbindung kann kabellos oder kabelgebunden erfolgen.

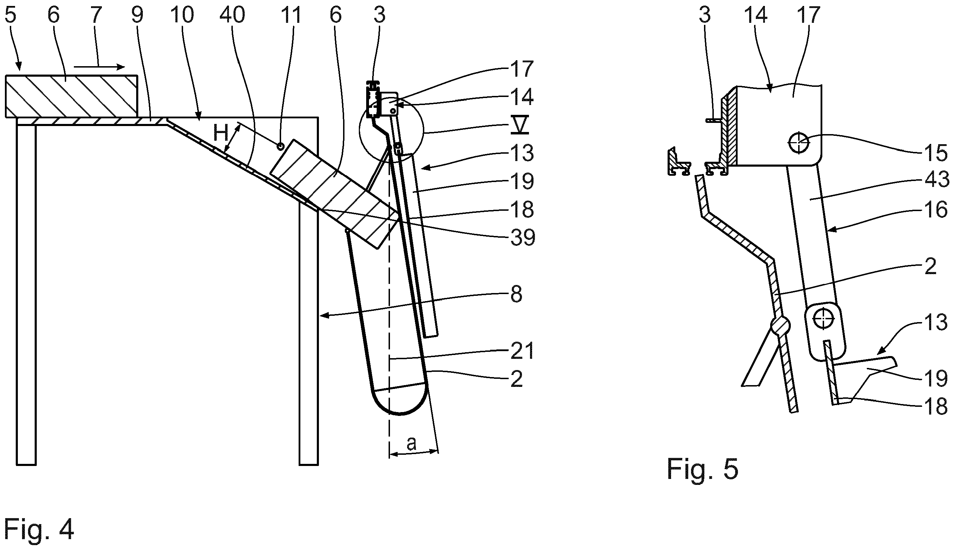

Die Lichtschranke der Erfassungseinheit 11 ist mit einem Höhenabstand H (vergleiche Fig. 4) zu der geneigten Rutschfläche 40 des Zuführschachts 10 angeordnet. Die Erfassungseinheit 11 ist geeignet, bei einem Transportgut zu erfassen, wenn dessen Höhe größer ist als der Höhenabstand H. Die Erfassungseinheit 11 übermittelt dann ein geeignetes Signal an die Steuerungseinheit 12. Es ist denkbar, dass die Steuerungseinheit 12 mit einem Aktuator in Signalverbindung steht. Die Steuerungseinheit 12 kann ein Stellsignal an den Aktuator übermitteln, damit dieser eine Verlagerungsbewegung einer Prallplatte 18 initiiert und/oder unterstützt.

Die Beladestation 1 weist eine Abweisevorrichtung 13 für die Transporttaschen 2 in der Beladestation 1 auf. Die Abweisevorrichtung 13 weist eine Befestigungseinheit 14 auf, mit der die Abweisevorrichtung 13 an der Fördervorrichtung 3 befestigt ist. Insbesondere ist die Abweisevorrichtung 13 an einer der Zuführvorrichtung 5 abgewandten Rückseite der Förderschiene angeschraubt.

Die Befestigungseinheit 14 ist gemäß dem gezeigten Ausführungsbeispiel als Halteschiene ausgeführt, die entlang der Förderrichtung 4 eine Längserstreckung aufweist, die im Wesentlichen der Breite des Zuführschachts 10 entspricht.

An der Befestigungseinheit 14 ist um eine Befestigungseinheit-Schwenkachse 15 eine Verbindungseinheit 16 schwenkbar angelenkt. Die Verbindungseinheit 16 weist zwei Stangen 43 auf, die entlang der Befestigungseinheit-Schwenkachse 15 beabstandet zueinander angeordnet und jeweils schwenkbar an der Befestigungseinheit 14 angelenkt sind. Die Stangen 43 sind an einer nicht näher dargestellten Drehhülse befestigt. Die Drehhülse ist um die Befestigungseinheit-Schwenkachse 15 drehbar angeordnet. Die Stangen 43 erstrecken sich jeweils von einer Außenseite der Drehhülse in radialer Richtung bezüglich der Befestigungseinheit-Schwenkachse 15.

Die in radialer Richtung zur Befestigungseinheit-Schwenkachse 15 orientierte Länge der Stangen 43 kann variieren und insbesondere entsprechend der geometrischen Verhältnisse an der Beladestation 1 festgelegt werden. Es ist insbesondere denkbar, dass die Länge der Stangen 43 jeweils Null ist, also keine Stangen 43 vorgesehen sind. In diesem Fall ist eine Prallplatte 18 unmittelbar an der Drehhülse angelenkt.

Die Befestigungseinheit 14 weist zwei sich im Wesentlichen senkrecht zur Befestigungseinheit-Schwenkachse 15 orientierte Befestigungslaschen 17 auf, die einteilig an der Befestigungseinheit 14 angeformt sind. Es ist auch denkbar, dass die Stangen 43 der Verbindungseinheit 16 entlang der Förderrichtung 4 miteinander verbunden sind. In diesem Fall ist die Verbindungseinheit 16 als Schwenkrahmen ausgeführt. Der Schwenkrahmen weist eine vergleichsweise hohe Stabilität, insbesondere entlang der Befestigungseinheit-Schwenkachse 15, auf.

Die Verbindungseinheit 16 ist an den Stangen 43 jeweils mit einer Prallplatte 18 verbunden. Die Verbindungseinheit 16 ist insbesondere starr mit der Prallplatte 18 verbunden. Eine winkelige Auslenkung, insbesondere eine Verschwenkung, der Verbindungseinheit 16 gegenüber der Befestigungseinheit 14 bewirkt unmittelbar eine im Wesentlichen identische Verschwenkung der Prallplatte 18 gegenüber der Befestigungseinheit 14. Die Prallplatte 18 ist aus einem vergleichsweise starren und stabilen Material hergestellt. Die Prallplatte 18 weist eine Grundfläche auf, die im Wesentlichen der Größe der Rückwand der Transporttasche 2 entspricht. Insbesondere ist die Prallplatte 18 im Bereich der Rückwand der Transporttasche 2 angeordnet, wo zugeführte Transportgüter 6 die Transporttasche 2 kontaktieren. Die Prallplatte 18 dient zum Stützen der Rückwand der Transporttasche 2.

Die Prallplatte 18 weist ein Zuführelement 19 auf, um die Transporttasche 2 der Beladestation 1 geordnet zuzuführen. Das Zuführelement 19 ist einteilig an der Prallplatte 18 angeformt. Das Zuführelement 19 ist insbesondere ein um eine Biegekante 20 gegenüber der Prallplatte 18 gebogenes Plattenelement. Das Zuführelement 19 verhindert ein seitliches Pendeln der Transporttaschen 2 in einer Ebene senkrecht zur Förderrichtung 3, wenn die Transporttasche 2 in die Beladestation 1 transportiert wird. Das Beladen der Transporttasche 2 ist dadurch zuverlässig und insbesondere fehlerunanfällig möglich.

Nachfolgend wird anhand der Fig. 1 bis 5 ein Beladevorgang der Transporttasche 2 in der Beladestation 1 näher erläutert. Zunächst wird eine leere, zu beladende Transporttasche 2 entlang der Förderrichtung 4 an der Fördervorrichtung 3 in die Beladestation 1 gefördert, bis die Transporttasche 2 mit der oberen Öffnung an dem Zuführschacht 10 angeordnet ist. Das Transportgut 6 wird entlang der Transportgutzuführrichtung 7 über die Ablagefläche 9 in den Zuführschacht 10 gefördert. Das Transportgut 6 rutscht entlang der Rutschfläche 40 des Zuführschachts 10 in Richtung der Transporttasche und kann selbsttätig in die Öffnung der Transporttasche 2 gleiten.

Wenn das Transportgut 6, wie in Fig. 1 bis 4 dargestellt, derart groß ist, also insbesondere entlang der Transportgutzuführrichtung 7 eine derart große Länge aufweist, dass in Folge der Schwerkraft ein selbsttätiges Kippen um die Übergabekante 39 und ein Hineinfallen des Transportgutes 6 in die Taschenöffnung nicht unmittelbar möglich ist, kann die Prallplatte 18 der Abweisevorrichtung 13 flexibel ausweichen. Die flexible Ausweichbewegung wird dadurch ermöglicht, dass die Abweisevorrichtung 13 ein Wegschwenken der Taschenrückwand von dem Zuführschacht 10 ermöglicht. Dadurch wird die Taschenöffnung der Transporttasche 2 vergrößert.

Durch das Anliegen des Transportguts 6 an der Taschenrückwand wird die Prallplatte 18 vom Beladetisch 8 entgegen der Schwerkraft weggedrückt. Die Prallplatte 18 wird gemäß Fig. 4 um die Befestigungseinheit-Schwenkachse 15 gegen den Uhrzeigersinn geschwenkt. Die Prallplatte 18 ist gegenüber der Vertikalen 21, die der Ausgangsposition der Prallplatte 18 entspricht, um einen Drehwinkel a geschwenkt. Sobald das Transportgut 6 in die Transporttasche 2 eingeführt und hineingefallen ist, wird die Prallplatte 18 in Folge der Schwerkraft wieder zurück in die Ausgangsposition geschwenkt. Die beladene Transporttasche 2 wird aus der Beladestation 1 abgefördert, sodass die nächste leere Transporttasche 2 beladen werden kann.

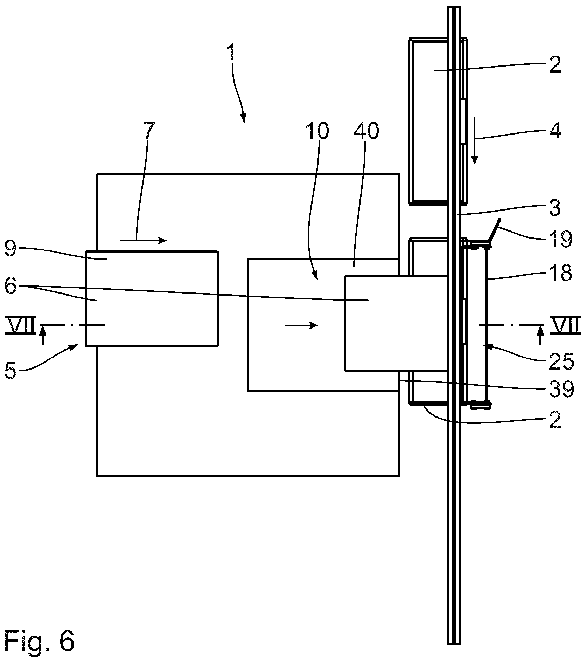

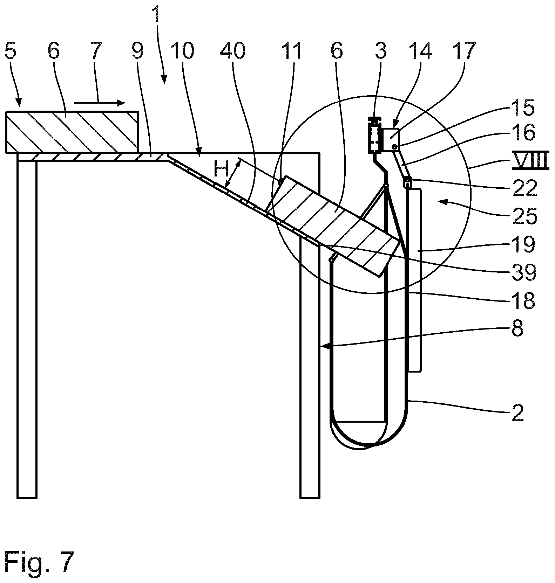

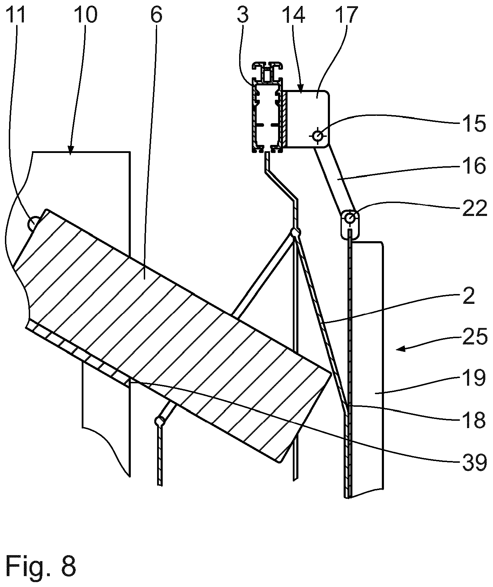

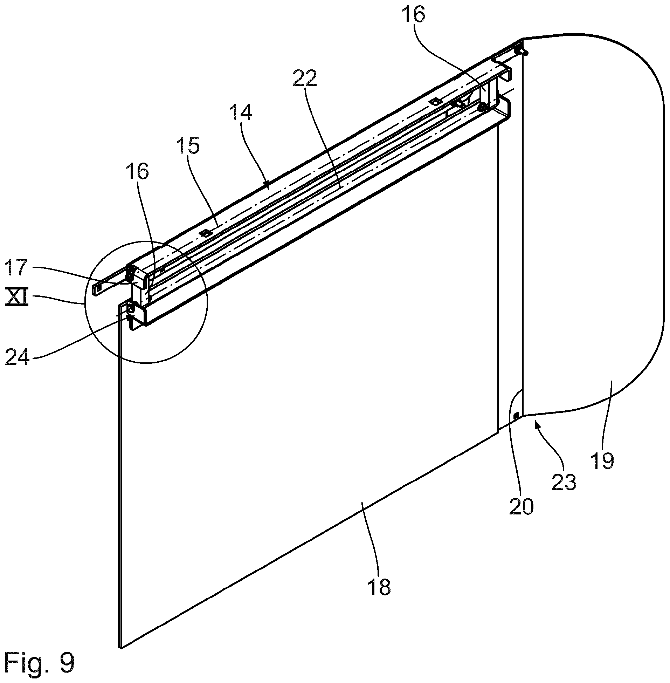

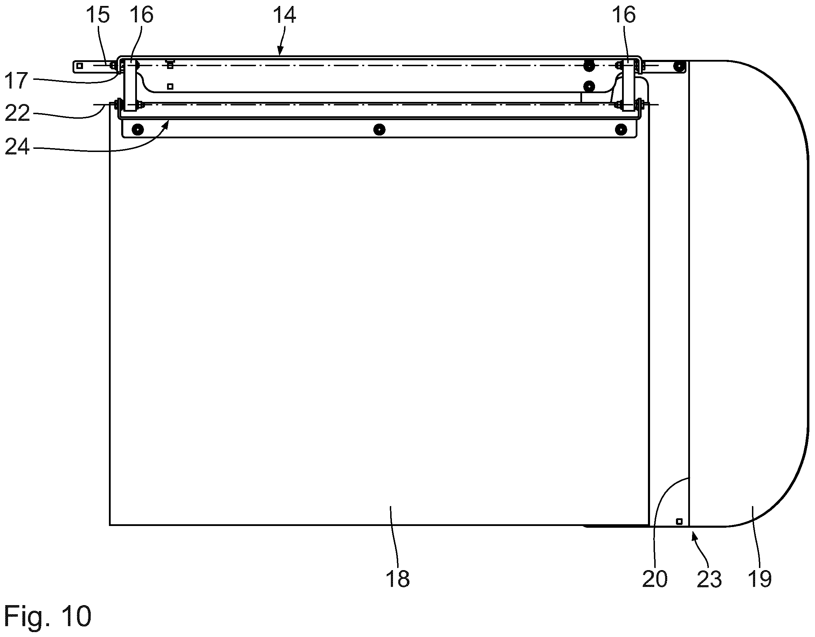

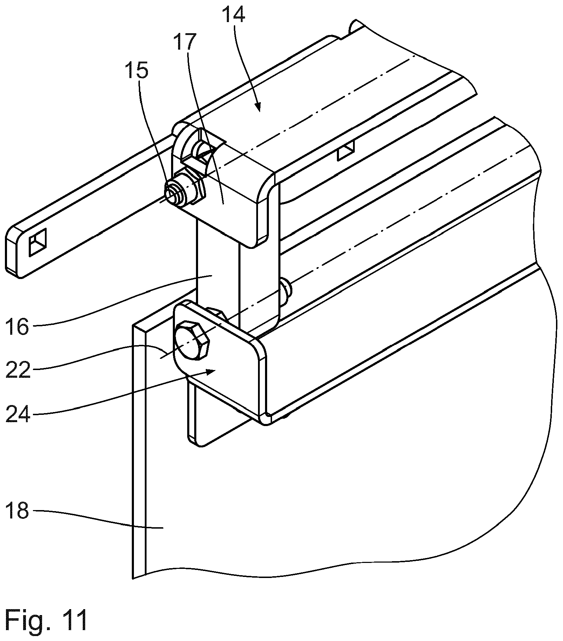

Fig. 6 bis 11 zeigen eine weitere Ausführung einer Beladestation 1. Komponenten, die denjenigen entsprechen, die vorstehend unter Bezugnahme auf die Fig. 1 bis 5 erläutert wurden, tragen die gleichen Bezugsziffern und werden nicht nochmals im Einzelnen diskutiert.

Der wesentliche Unterschied der Abweisevorrichtung 25 gegenüber der vorherigen Ausführungsform besteht darin, dass die Prallplatte 18 um eine Prallplatten-Schwenkachse 22 schwenkbar an der Verbindungseinheit 16 angelenkt ist.

Dadurch, dass die Verbindungseinheit 16 eine zweite Schwenkachse aufweist, kann die Prallplatte 18 in Folge der Schwerkraft im Wesentlichen vertikal nach unten hängen. Der Schwenkwinkel a beträgt bei diesem Ausführungsbeispiel gegenüber der Vertikalen 21 0°.

Ein weiterer Unterschied besteht darin, dass an der Prallplatte 18 eine Verlängerung 23 angesetzt ist, an der einteilig das Zuführelement 19 angeformt ist.

Die beidseitigen Stangen der Verbindungseinheit 16 sind jeweils schwenkbar über eine Bolzenverbindung mit der Befestigungseinheit 14 und der Prallplatte 18 verbunden. Für die Befestigung an der Prallplatte ist eine Prallplatten-Schiene 24 vorgesehen. Die Prallplatten-Schiene 24 ist im Wesentlichen U-förmig ausgeführt, um die Bolzenverbindung entlang der Prallplatten-Schwenkachse 22 aufzunehmen. Die Befestigungseinheit-Schwenkachse 15 und die Prallplatten-Schwenkachse 22 sind parallel zueinander orientiert.

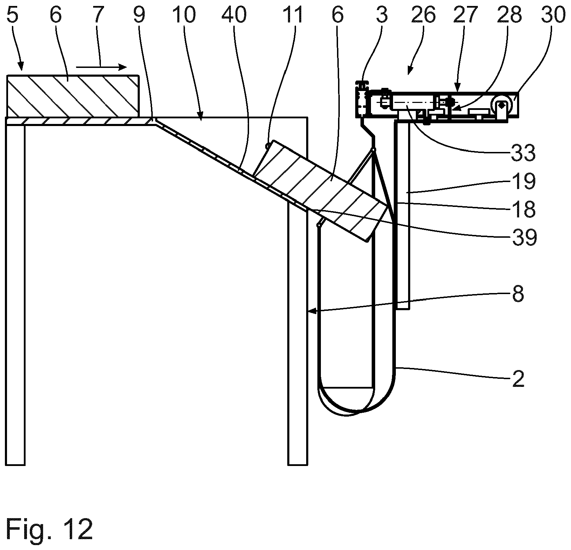

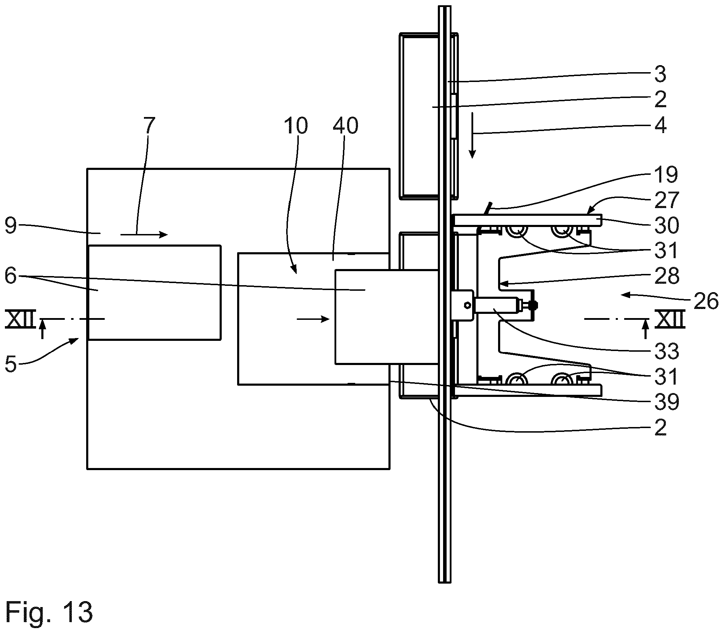

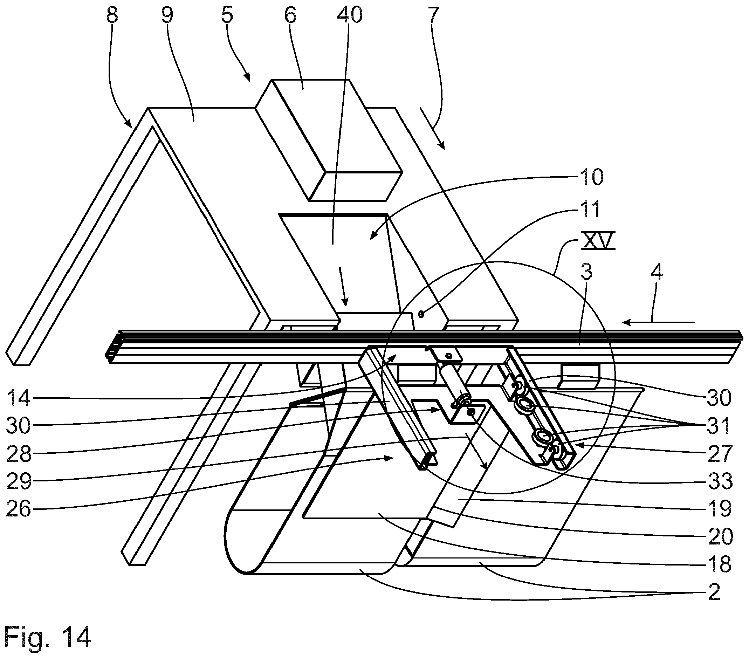

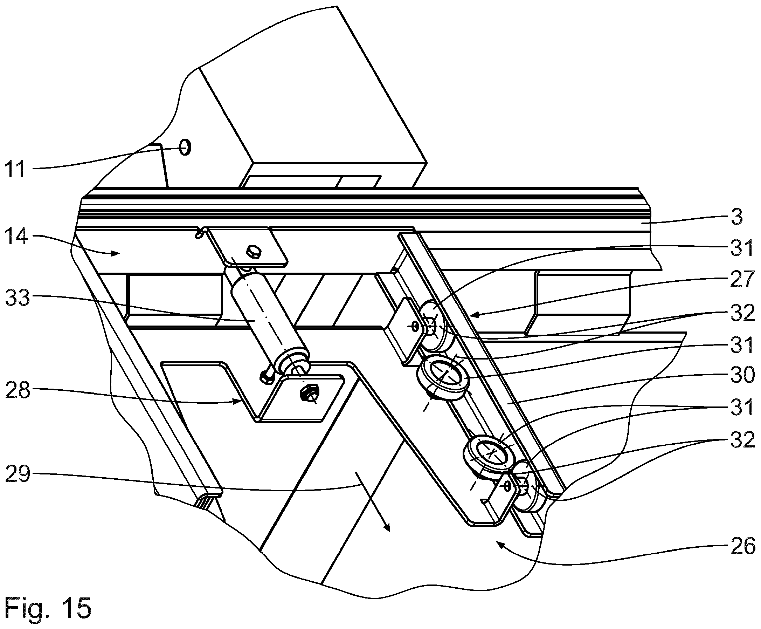

Fig. 12 bis 15 zeigen eine weitere Ausführungsform einer Beladestation mit einer Abweisevorrichtung 26. Komponenten, die denjenigen entsprechen, die vorstehend unter Bezugnahme auf die Fig. 1 bis 11 bereits erläutert wurden, tragen die gleichen Bezugsziffern und werden nicht nochmals im Einzelnen erläutert.

Bei der Abweisevorrichtung 26 weist die Verbindungseinheit 27 ein Linearverlagerungselement 28 auf. Bei dieser Ausführungsform ist die Prallplatte 18 linear entlang einer Verlagerungsrichtung gegenüber der Befestigungseinheit 14 verlagerbar. Die Verlagerungsrichtung 29 entspricht im Wesentlichen der Transportgutzuführrichtung 7. Die Verlagerungsrichtung 29 ist quer und insbesondere senkrecht zur Förderrichtung 4 der Fördervorrichtung 3 orientiert.

Die Verbindungseinheit 27 weist seitliche Führungsbahnen 30, insbesondere Führungsschienen, auf, an welchen Führungsrollen 31 abrollbar geführt angeordnet sind.

Die Führungsrollen 31 sind jeweils um eine Rollachse 32 drehbar an der Verbindungseinheit 27 befestigt. Gemäß dem gezeigten Ausführungsbeispiel sind jeweils einer Führungsbahn 30 zwei Führungsrollen 31 zur seitlichen Führung und jeweils zwei Führungsrollen 31 zur vertikalen Führung vorgesehen. Die entsprechenden Drehachsen 32 sind vertikal beziehungsweise horizontal orientiert.

Die Führungsbahnen 30 sind einteilig an der Befestigungseinheit 14 angeformt. Die Führungsbahnen 30 sind unbeweglich bezüglich der Fördervorrichtung 3 angeordnet. Die Führungsrollen 31 sind zusammen mit der Verbindungseinheit 27 verlagerbar und rollen dabei an der Führungsfläche der Führungsbahnen 30 ab.

Die Abweisevorrichtung 26 weist einen elektrisch antreibbaren Stellzylinder 33 auf, der in Verlagerungsrichtung 29 des Linearverlagerungselements 28 teleskopierbar ist.

Der Stellzylinder 33 weist insbesondere einen nicht näher dargestellten, insbesondere integrierten elektrischen Schrittmotor als Antrieb auf, der beispielsweise mit einem Spindeltrieb zusammenwirkt und eine Axialverlagerung, also das teleskopierbare Ausfahren in Verlagerungsrichtung 29 ermöglicht. Der Stellzylinder 33 weist insbesondere einen Inkrementalgeber auf, der mit einem im Zylinder integrierten Sensorelement zusammenwirkt, sodass die aktuelle Ausfahrposition des Stellzylinders bestimmbar ist.

Der Stellzylinder 33 ist insbesondere mit einer Steuerungseinheit in Signalverbindung, um beispielsweise in Abhängigkeit der Größe des Transportguts eine automatische Verlagerung der Abweisevorrichtung 26 mittels des Stellzylinders 33 zu bewerkstelligen.

Es ist grundsätzlich denkbar, dass in dem Stellzylinder 33 ein Kraftspeicherelement integriert ist, insbesondere in Form einer Druckfeder, die beim Ausfahren der Kolbenstange des Stellzylinders 33 komprimiert wird. Dadurch wird eine Federkraft eingeprägt, die eine Rückstellkraft auf den Stellzylinder 33 ausübt, sodass eine automatische Rückstellung des Stellzylinders 33, insbesondere selbsttätig, erfolgt.

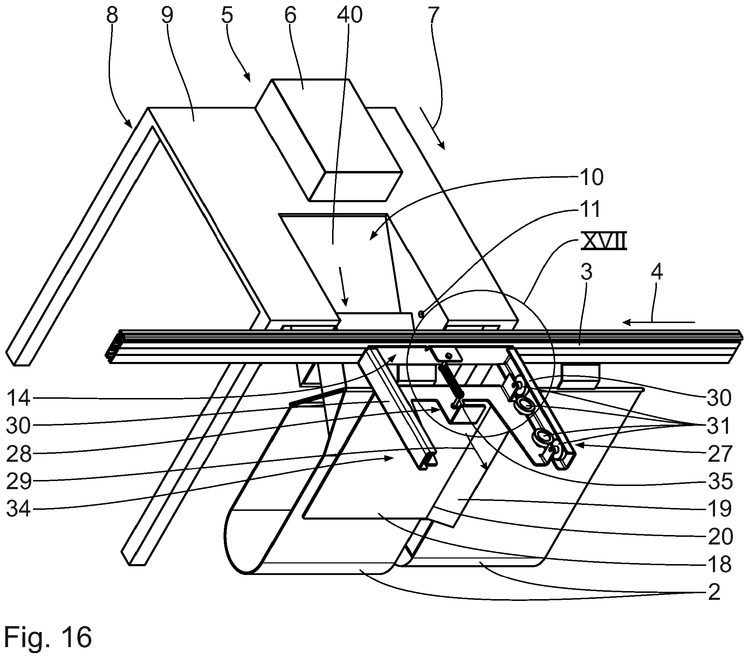

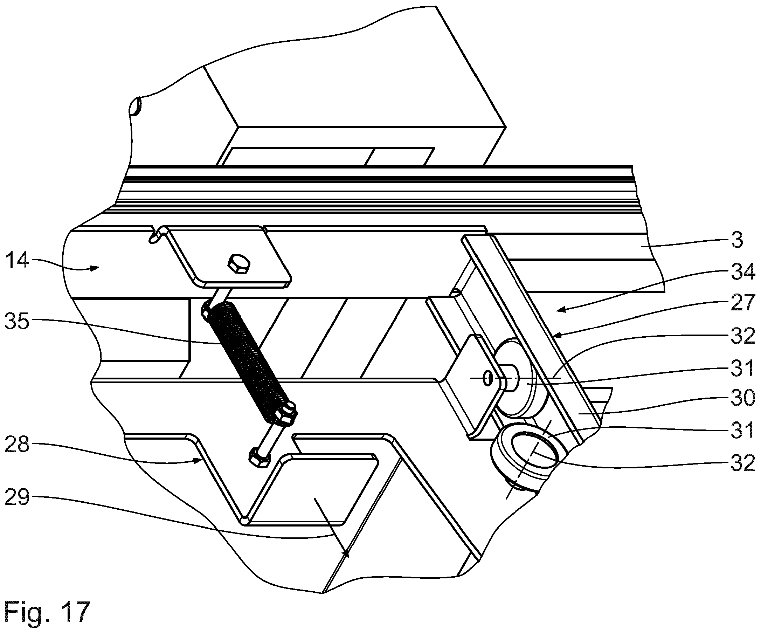

Fig. 16 und 17 zeigen eine weitere Ausführungsform einer Beladestation 1. Komponenten, die denjenigen entsprechen, die vorstehend unter Bezugnahme auf die Fig. 1 bis 15 bereits erläutert wurden, tragen die gleichen Bezugsziffern und werden nicht nochmals im Einzelnen diskutiert.

Die Abweisevorrichtung 34 entspricht im Wesentlichen der Abweisevorrichtung 26, weist also eine Verbindungseinheit mit Linearverlagerungselement auf. Der wesentliche Unterschied besteht darin, dass ein Kraftspeicherelement in Form einer Schraubenfeder 35 vorgesehen ist. Die Schraubenfeder 35 ist mit einem ersten Ende an der Befestigungseinheit 14 und mit einem zweiten Ende an der Verbindungseinheit 27 angeordnet. Eine Verlagerung der Verbindungseinheit 27 entlang der Linearverlagerungsrichtung 29 bewirkt eine Dehnung der Schraubenfeder 35, sodass eine Rückstellkraft automatisch eingeprägt wird, wenn Transportgut 6 eine Verlagerung der Prallplatte 18 mit der Verbindungeinheit 27 bewirkt.

In dem gezeigten Ausführungsbeispiel ist das Kraftspeicherelement 35 derart ausgeführt, dass es in einem maximal eingefahrenen Zustand im Wesentlichen kraftfrei angeordnet ist. Ein Auseinanderziehen des Kraftspeicherelements 35 bewirkt ein Beaufschlagen eines internen Kraftspeichers mit einer Kraft, sodass eine Rückstellkraft eingeprägt wird, die eine Bewegung der Verbindungseinheit zurück in die Ausgangsposition bewirkt. Das Kraftspeicherelement 35 unterstützt und/oder veranlasst die Rückstellbewegung der Verbindungseinheit 27 in die Ausgangsposition, da insbesondere bei der Ausführungsform der Abweisevorrichtung 26 eine schwerkraftbedingte Rückstellbewegung nicht erfolgt, da die Verlagerungsrichtung 29 insbesondere horizontal orientiert ist.

Es ist grundsätzlich denkbar, die Verlagerungsrichtung mit einer nach oben orientierten Steigung auszuführen, indem beispielsweise die Führungsbahnen 30 eine Neigung gegenüber der Horizontalen nach oben aufweisen. Dann wird die Rückstellbewegung in Folge der Schwerkraft unterstützt durch das Kraftspeicherelement 35. Die Führungsbahnen 30 sind mechanische robust in Rahmenbauweise ausgeführt.

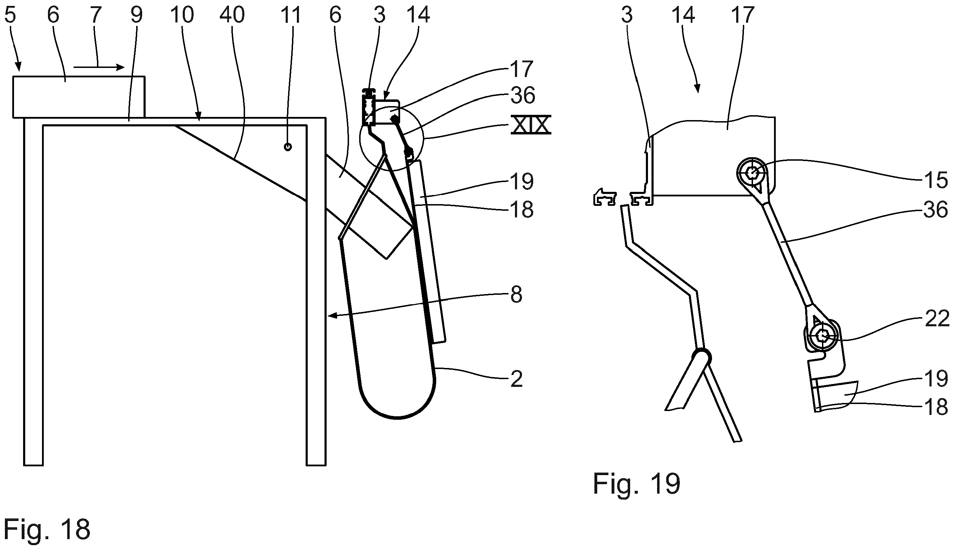

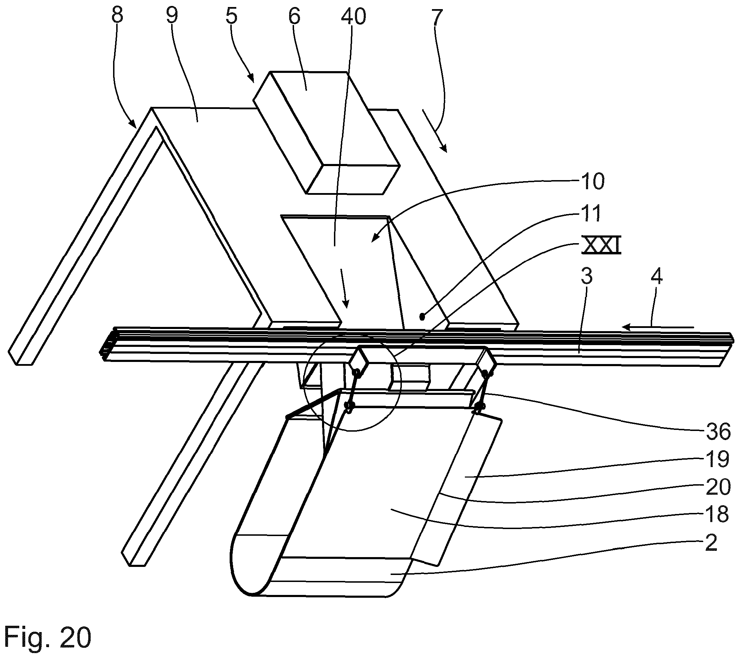

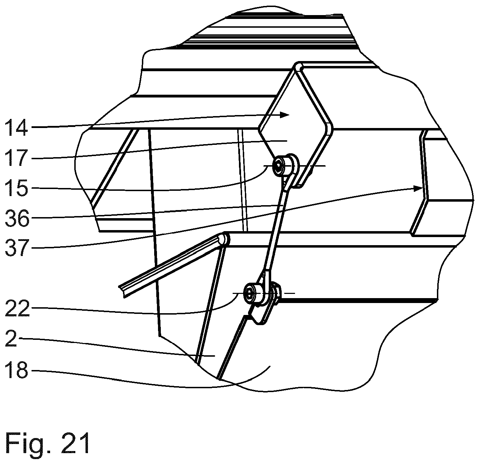

Fig. 18 bis 21 zeigen eine weitere Ausführungsform einer Beladestation 1. Komponenten, die denjenigen entsprechen, die vorstehend unter Bezugnahme auf Fig. 1 bis 17 bereits erläutert wurden, tragen die gleichen Bezugsziffern und werden nicht nochmals im Einzelnen diskutiert.

Die Beladestation entspricht im Wesentlichen der Ausführung gemäß Fig. 6 bis 11, wobei die Verbindungseinheit 16 zwei Seilelemente 36 anstelle der Stangen aufweist. Die Seilelemente 36 sind jeweils mit einem ersten Ende schwenkbar um die Befestigungseinheit-Schwenkachse 15 und um die Prallplatten-Schwenkachse 22 angelenkt. Dadurch, dass die Seilelemente 36 ausschließlich auf Zug belastet werden, ist deren Verwendung anstelle von Stangen möglich. Eine Eigensteifigkeit ist für die Elemente der Verbindungseinheit 16 nicht erforderlich. Die Ausführung mit den Seilelementen 36 ist unkompliziert und kostensparend.

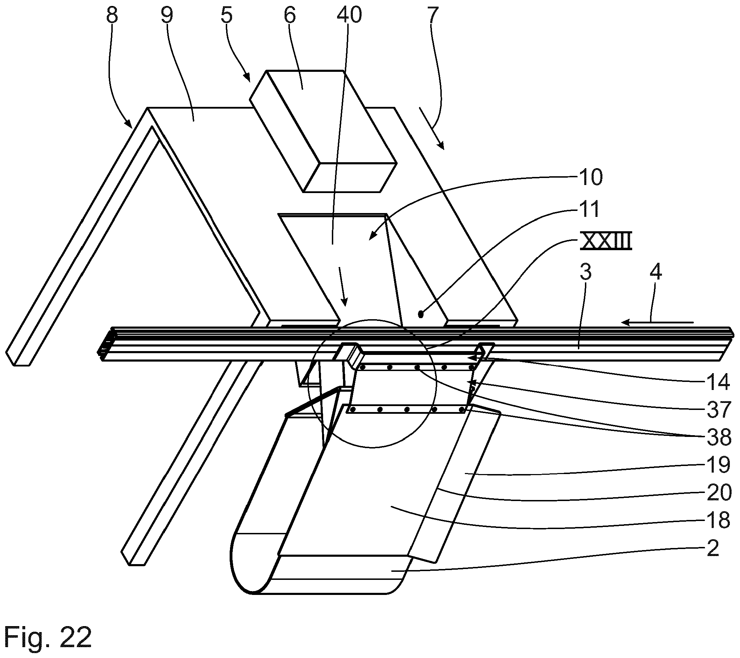

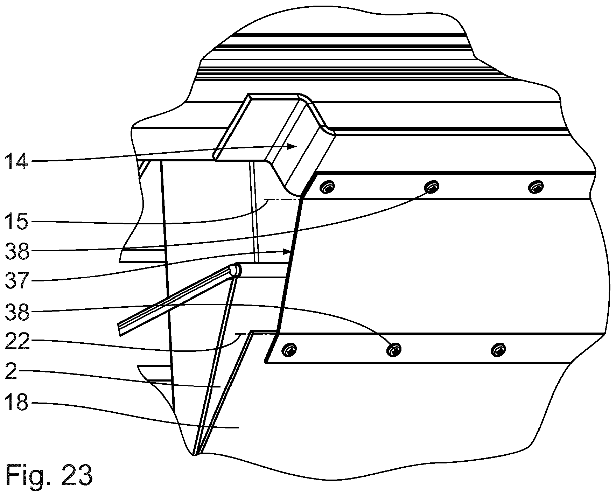

Fig. 22 und 23 zeigen eine weitere Ausführungsform einer Beladestation 1. Komponenten, die denjenigen entsprechen, die vorstehend unter Bezugnahme auf Fig. 1 bis 21 bereits erläutert wurden, tragen die gleichen Bezugsziffern und werden nicht nochmals im Einzelnen diskutiert.

Der wesentliche Unterschied gegenüber der vorherigen Ausführungsform besteht darin, dass die Verbindungseinheit 16 ein entlang der Förderrichtung 4 durchgängiges, flexibles Verbindungselement 37 aufweist. Das Verbindungselement 37 ist gemäß dem gezeigten Ausführungsbeispiel als textile Stoffbahn ausgeführt, die mit mehreren Befestigungselementen 38 jeweils an der Befestigungseinheit 14 beziehungsweise der Prallplatte 18 befestigt ist. Das flexible Verbindungselement 37 kann auch aus Leder oder Kunststoff hergestellt sein. Als Befestigungselemente 38 dienen Befestigungsschrauben.

Das Verbindungselement 37 erstreckt sich entlang der Förderrichtung 4 im Wesentlichen über die gesamte Breite der Prallplatte 18 beziehungsweise der Befestigungseinheit 14. Das Verbindungselement 37 ermöglicht eine erhöhte Seitenstabilität bei der Schwenkung um die Schwenkachsen 15, 22. Die Befestigungseinheit-Schwenkachse 15 und die Prallplatten-Schwenkachse 22 werden durch integrierte Schwenkgelenke des Verbindungselements 37 ausgebildet. Eine separate Bolzenverbindung ist entbehrlich.

Es ist denkbar, das Verbindungselement 37 aus einem Material herzustellen, das eine Eigensteifigkeit aufweist, wie beispielsweise Kunststoff. In diesem Fall können die Schwenkachsen 15, 22 durch Filmscharniere des Verbindungselements 37 vorgegeben sein.

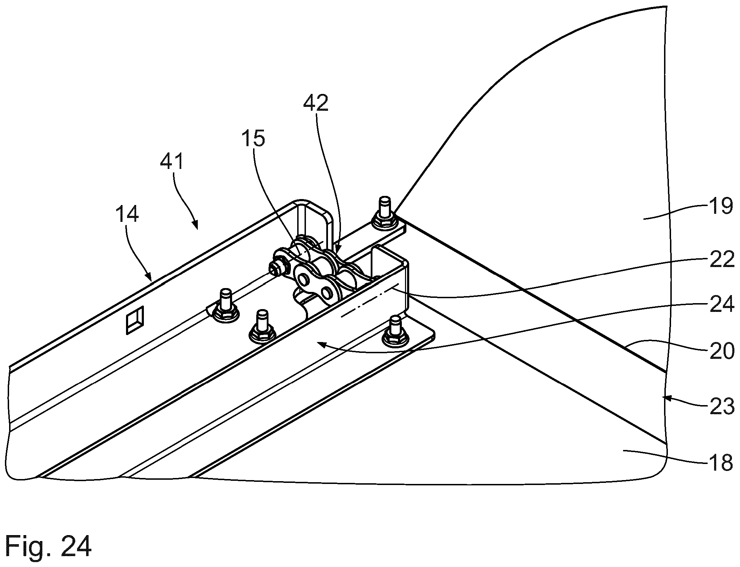

Fig. 24 zeigt eine weitere Ausführungsform einer Abweisevorrichtung 41. Komponenten, die denjenigen entsprechen, die vorstehend unter Bezugnahme auf die Fig. 1 bis 23 bereits erläutert wurden, tragen die gleichen Bezugsziffern und werden nicht nochmals im Einzelnen diskutiert.

Der wesentliche Unterschied gegenüber den vorherigen Ausführungsformen besteht darin, dass die Verbindungeinheit 16 zwei Kettenabschnitte 42 aufweist, die jeweils schwenkbar bezüglich der Befestigungseinheit-Schwenkachse 15 und bezüglich der Prallplatten-Schwenkachse 22 doppelscharniergelenkig an der Befestigungseinheit 14 beziehungsweise der Prallplatte 18 angelenkt sind. Jeder Kettenabschnitt 42 weist mehrere, insbesondere mindestens zwei, schwenkbar miteinander verbundene Kettenglieder auf. Durch die Anzahl der Kettenglieder der Kettenabschnitte 42 kann die Parallelverschiebung der Ausweichbewegung der Prallplatte 18 beeinflusst werden. Die Kettenabschnitte 42 sind kostengünstig verfügbar.

## Patentansprüche

1. Beladestation für eine Hängeförderanlage mit
- einer Fördervorrichtung (3) zum Fördern von Transporttaschen (2),
- einer Zuführvorrichtung (5) zum Zuführen von Transportgut (6) entlang einer Transportgutzuführrichtung (7) in die Transporttaschen (2),
**gekennzeichnet durch**
- eine an der Fördervorrichtung (3) befestigte Abweisevorrichtung (13), die eine individuelle Anpassung einer Öffnung der Transporttasche (2) an die Größe des Transportguts (6) ermöglicht, wobei die Abweisevorrichtung umfasst
-- eine Befestigungseinheit (14), mit der die Abweisevorrichtung (13) an der Fördervorrichtung (3) der Hängeförderanlage befestigt ist,
-- eine getrennt von einer Transporttasche (2) ausgeführte Prallplatte (18) zur Stützung einer Rückwand der Transporttasche (2) beim Beladen mit einem Transportgut (6), wobei die Prallplatte (18) in Abhängigkeit der Größe des Transportguts (6) auslenkbar ist und ein Ausweichen der Rückwand der Transporttasche (2) derart ermöglicht, dass eine Öffnung der Transporttasche (2) beim Beladen mit Transportgut (6) vergrößert ist, wenn das Transportgut (6) derart groß ist, dass es durch die Öffnung der Transporttasche nicht selbsttätig infolge der Schwerkraft in die Transporttasche (2) fallen kann, wobei durch das Auslenken der Prallplatte (18) durch das Transportgut (6) auf die Prallplatte (18) eine Rückstellkraft eingeprägt wird, wobei die Prallplatte (18) selbsttätig infolge der Rückstellkraft in die Ausgangsposition zurückverlagert und dadurch die Öffnung der Transporttasche (2) in die Ausgangsposition rückgeführt wird, sobald das Transportgut (6) durch die Öffnung der Transporttasche (2) in diese gefallen ist,
-- eine Verbindungseinheit (16), die die Prallplatte (18) mit der Befestigungseinheit (14) beweglich verbindet.

2. Beladestation gemäß Anspruch 1, **dadurch gekennzeichnet, dass** die Verbindungseinheit (16) um eine Befestigungseinheit-Schwenkachse (15) schwenkbar an der Befestigungseinheit (14) angelenkt ist.

3. Beladestation gemäß einem der vorstehenden Ansprüche, **dadurch gekennzeichnet, dass** die Verbindungseinheit (16) um eine Prallplatten-Schwenkachse (22) schwenkbar an der Prallplatte (18) angelenkt ist.

4. Beladestation gemäß Anspruch 2 oder 3, **dadurch gekennzeichnet, dass** die Verbindungseinheit (16) eine Kette (42), eine Stange, eine Leiste, ein Seil (36) und/oder eine Textilbahn (37) aufweist.

5. Beladestation gemäß Anspruch 1, **dadurch gekennzeichnet, dass** die Verbindungseinheit (16) ein Linearverlagerungselement (28) für eine Linearverlagerung der Prallplatte (18) gegenüber der Befestigungseinheit (14) entlang einer Verlagerungsrichtung (29) aufweist.

6. Beladestation gemäß Anspruch 5, **dadurch gekennzeichnet, dass** die Verbindungseinheit (16) Führungselemente zum geführten Verlagern entlang der Verlagerungsrichtung (29) aufweist, wobei insbesondere Führungsrollen (31) vorgesehen sind, die an jeweils korrespondierenden Führungsbahnen (30) abrollen.

7. Beladestation gemäß einem der vorstehenden Ansprüche, **dadurch gekennzeichnet, dass** die Verbindungseinheit (16) ein Kraftspeicherelement (33) aufweist.

8. Beladestation gemäß einem der vorstehenden Ansprüche, **dadurch gekennzeichnet, dass** die Verbindungseinheit (16) einen Verlagerungsaktor für eine angetriebene Verlagerung der Prallplatte (18) aufweist.

9. Beladestation gemäß einem der vorstehenden Ansprüche, **dadurch gekennzeichnet, dass** die Prallplatte (18) ein Zuführelement (19) zum geordneten Zuführen der Transporttasche (2) in die Beladestation (1) aufweist.

10. Beladestation gemäß einem der vorstehenden Ansprüche, **dadurch gekennzeichnet, dass** die Prallplatte (18) senkrecht zur Transportgutzuführrichtung (7) orientiert ist.

11. Beladestation gemäß einem der vorstehenden Ansprüche, **gekennzeichnet durch** eine Erfassungseinheit (11) zum Erfassen von Größe und/oder Masse des Transportguts (6).

12. Beladestation gemäß einem der vorstehenden Ansprüche, **gekennzeichnet durch** eine Steuerungseinheit (12) zum gesteuerten Beladen der Transporttasche (2) in der Beladestation (1).

13. Beladestation gemäß Anspruch 12, **dadurch gekennzeichnet, dass** die Steuerungseinheit (12) mit der Erfassungseinheit (11) und/oder mit einem Verlagerungsaktor zum gezielten Beladen der Transporttasche (2) in Signalverbindung steht.

14. Beladestation gemäß einem der vorstehenden Ansprüche, **dadurch gekennzeichnet, dass** die Zuführvorrichtung (5) eine Ablagefläche (9) mit Zuführschacht (10) aufweist.

## Claims

1. A loading station for an overhead conveyor system, comprising
- a conveyor device (3) to convey the transport bags (2),
- a feed device (5) to feed transport products (6) along a product feed direction (7) into the transport bags (2),
**characterized by**
- a guard device (13) mounted to the conveyor device (3), which allows an opening of the transport bag (2) to be individually adapted to the size of the transport material (6), wherein the deflector device comprises
-- a mounting unit (14) with which the guard device (13) is mounted to the conveyor device (3) of the overhead conveyor system,
-- an impact plate (18) designed to be separate from a transport bag (2), to support a rear wall of the transport bag (2) when being loaded with a product (6) to be transported, wherein the impact plate (18) may be deflected depending on the size of the product (6) to be transported and enables the rear wall of the transport bag (2) to give way such that an opening of the transport bag (2) is enlarged when being loaded with a product (6) to be transported, when the product (6) to be transported is so large that it cannot fall automatically through the opening of the transport bag into the transport bag (2) as a result of gravity, wherein a restoring force is impressed on the impact plate (18) by the deflection of the impact plate (18) by the product (6) to be transported, wherein the impact plate (18) is automatically displaced back into the starting position as a result of the restoring force and the opening of the transport bag (2) is thereby returned into the starting position as soon as the product (6) to be transported has fallen through the opening of the transport bag (2) into the latter,
-- a connection unit (16) which movably connects the impact plate (18) to the mounting unit (14).

2. A loading station according to claim 1, **characterized in that** the connection unit (16) is articulated to the mounting unit (14) in such a way as to be pivotable about a mounting unit pivot axis (15).

3. A loading station according to any one of the preceding claims, **characterized in that** the connection unit (16) is articulated to the impact plate (18) in such a way as to be pivotable about an impact plate pivot axis (22).

4. A loading station according to claim 2 or 3, **characterized in that** the connection unit (16) comprises a chain (42), a rod, a bar, a cable (36) and/or a textile web (37).

5. A loading station according to claim 1, **characterized in that** the connection unit (16) comprises a linear displacement member (28) for a linear displacement of the impact plate (18) in relation to the mounting unit (14) along a displacement direction (29).

6. A loading station according to claim 5, **characterized in that** the connection unit (16) has guide members for the guided displacement along the displacement direction (29), wherein in particular guide rolls (31) are provided which roll along guide tracks (30) each matching said guide rolls (31).

7. A loading station according to any one of the preceding claims, **characterized in that** the connection unit (16) comprises an energy storage member (33).

8. A loading station according to any one of the preceding claims, **characterized in that** the connection unit (16) comprises a displacement actuator for a driven displacement of the impact plate (18).

9. A loading station according to any one of the preceding claims, **characterized in that** the impact plate (18) comprises a feed member (19) for an ordered feeding of the transport bag (2) into the loading station (1).

10. A loading station according to any one of the preceding claims, **characterized in that** the impact plate (18) is oriented to be perpendicular to the product feeding direction (7).

11. A loading station according to any one of the preceding claims, **characterized by** a detection unit (11) to detect the size and/or mass of the product (6) to be transported.

12. A loading station according to any one of the preceding claims, **characterized by** a control unit (12) for controlled loading of the transport bag (2) in the loading station (1).

13. A loading station according to claim 12, **characterized in that** the control unit (12) is in signal communication with the detection unit (11) and/or with a displacement actuator for targeted loading of the transport bag (2).

14. A loading station according to any one of the preceding claims, **characterized in that** the feeding device (5) has a storage surface (9) with a feed chute (10).

## Revendications

1. Poste de chargement pour un convoyeur suspendu, comprenant
- un dispositif de transport (3) pour transporter des sacs de transport (2),
- un dispositif d'alimentation (5) pour alimenter les sacs de transport (2) en matériau de transport (6) le long d'une direction d'alimentation en matériau de transport (7),
**caractérisé par**
- un dispositif déflecteur (13) fixé au dispositif de transport (3), qui permet d'adapter individuellement une ouverture du sac de transport (2) à la taille du matériau de transport (6), le dispositif déflecteur comportant
-- une unité de fixation (14) avec laquelle le dispositif déflecteur (13) est fixé au dispositif de transport (3) du convoyeur suspendu,
-- une chicane (18) conçue séparément d'un sac de transport (2) pour soutenir une paroi arrière du sac de transport (2) pendant le chargement avec un matériau de transport (6), dans laquelle la chicane (18) peut être déviée en fonction de la taille du matériau de transport (6) et permet à la paroi arrière du sac de transport (2) de se dévier de telle sorte qu'une ouverture du sac de transport (2) est agrandie pendant le chargement avec le matériau de transport (6) lorsque le matériau de transport (6) a une telle taille, qu'il ne peut pas tomber automatiquement par l'ouverture du sac de transport dans le sac de transport (2) sous l'effet de la gravité, dans laquelle une force de rappel étant exercée sur la chicane (18) par la déviation de la chicane (18) par le matériau de transport (6), dans laquelle la chicane (18) est automatiquement ramenée dans la position de départ sous l'effet de la force de rappel et l'ouverture du sac de transport (2) est ainsi ramenée dans la position de départ dès que le matériau de transport (6) est tombé à travers l'ouverture du sac de transport (2) dans celui-ci,
-- une unité de liaison (16) qui relie de manière mobile la chicane (18) à l'unité de fixation (14).

2. Poste de chargement selon la revendication 1, **caractérisé en ce que** l'unité de liaison (16) est articulée sur l'unité de fixation (14) de manière à pouvoir pivoter autour d'un axe de pivotement (15) de l'unité de fixation.

3. Poste de chargement selon l'une quelconque des revendications précédentes, **caractérisé en ce que** l'unité de liaison (16) est articulée de manière pivotante sur la chicane (18) autour d'un axe de pivotement (22) de la chicane.

4. Poste de chargement selon la revendication 2 ou 3, **caractérisé en ce que** l'unité de liaison (16) présente une chaîne (42), une tige, une barre, une corde (36) et/ou une bande textile (37).

5. Poste de chargement selon la revendication 1, **caractérisé en ce que** l'unité de liaison (16) présente un élément de déplacement linéaire (28) pour le déplacement linéaire de la chicane (18) par rapport à l'unité de fixation (14) le long d'une direction de déplacement (29).

6. Poste de chargement selon la revendication 5, **caractérisé en ce que** l'unité de liaison (16) présente des éléments de guidage pour un déplacement guidé le long de la direction de déplacement (29), dans laquelle en particulier des galets de guidage (31) sont prévus qui roulent sur des pistes de guidage (30) respectivement correspondantes.

7. Poste de chargement selon l'une quelconque des revendications précédentes, **caractérisé en ce que** l'unité de liaison (16) présente un élément de stockage de force (33).

8. Poste de chargement selon l'une quelconque des revendications précédentes, **caractérisé en ce que** l'unité de liaison (16) présente un actionneur de déplacement pour un déplacement entraîné de la chicane (18).

9. Poste de chargement selon l'une quelconque des revendications précédentes, **caractérisé en ce que** la chicane (18) présente un élément d'alimentation (19) pour alimenter le sac de transport (2) dans le poste de chargement (1) de manière ordonnée.

10. Poste de chargement selon l'une quelconque des revendications précédentes, **caractérisé en ce que** la chicane (18) est orientée perpendiculairement à la direction d'alimentation de matériau de transport (7).

11. Poste de chargement selon l'une quelconque des revendications précédentes, **caractérisé par** une unité de détection (11) pour détecter la taille et/ou la masse du matériau de transport (6).

12. Poste de chargement selon l'une quelconque des revendications précédentes, **caractérisé par** une unité de commande (12) pour le chargement contrôlé du sac de transport (2) dans le poste de chargement (1).

13. Poste de chargement selon la revendication 12, **caractérisé en ce que** l'unité de commande (12) est en communication de signaux avec l'unité de détection (11) et/ou avec un actionneur de déplacement pour le chargement ciblé du sac de transport (2).

14. Poste de chargement selon l'une quelconque des revendications précédentes, **caractérisé en ce que** le dispositif d'alimentation (5) comprend une surface de dépôt (9) avec un puits d'alimentation (10).
